# EUROPEAN PATENT APPLICATION

(11) **EP 3 315 227 A1**
(43) Date of publication of application: **02.05.2018**
(21) Application number: 17197634.3
(22) Date of filing: 20.10.2017
(51) Int. Cl.: B22F 3/105, B33Y 10/00, B33Y 40/00

(54) **METHOD OF MANUFACTURING METAL ARTICLES**

(30) Priority: 21.10.2016 US 201615331306
(71) Applicant: Hamilton Sundstrand Corporation, Charlotte, NC 28217-4578 (US)
(72) Inventor: MIRONETS, Sergey, Charlotte, NC North Carolina 28202 (US); GIULIETTI, Diana, Tariffville, CT Connecticut 06081 (US); VERSLUYS, Kiley James, Lawndale, CA 90260 (US)
(74) Representative: Hughes, Andrea Michelle

(57) **Abstract**

A method for making an article is disclosed. According to the method, a digital model of the article is inputted into an additive manufacturing apparatus. The additive manufacturing apparatus applies energy from an energy source to a metal powder to fuse the metal powder particles and form fused metal at a first density in at least a portion of the article corresponding to the digital model. The fused metal is heated with application of an electric field and applying pressure to increase the density of the fused metal to a second density greater than the first density.

## Description

### BACKGROUND

This disclosure relates to additive manufacturing of metal articles.

Additive manufacturing technologies have been used and proposed for use for fabricating various types of articles from various types of materials. Broadly viewed, additive manufacturing can include any manufacturing process that incrementally adds material to an assembly during fabrication, and has been around in one form or another for many years. Modern additive manufacturing techniques, however, have been blended with three-dimensional computer imaging and modeling in various types to produce shapes and physical features on articles that are not readily produced with conventional molding, shaping, or machining techniques. Such techniques were initially developed using polymer compositions that are fusible or polymerizable in response to a controllable source of light or radiation such as a laser. Three-dimensional articles can be fabricated a layer at a time based on data from a corresponding layer of a three-dimensional computer model, which is generally known as stereolithography. With these techniques, a polymer powder or polymerizable liquid polymer composition is exposed to a source of energy such as a laser to fuse a thermoplastic polymer powder by heating it to a fluid state or by initiating a reaction between components in a powder or polymerizable liquid composition. The powder or liquid can be applied a layer at a time by any known mechanism such as by spray or other application, but is often maintained in a bed where the article being fabricated is formed. After each layer is fused and solidified, the article is lowered in the bed or the level of the bed is raised so that a layer of powder or liquid covers the previously-formed layer of the article, and another layer of the powder or liquid is fused and solidified by selective exposure to the energy source based on data from another corresponding layer of the computer model.

Additive manufacturing techniques have also been used for the fabrication of metal articles. Metal thermal spray and other additive manufacturing techniques for metals have of course been known for some time. The application of stereolithographic manufacturing techniques to metals has led to significant advancements in the fabrication of three-dimensional metal articles. Using such techniques, a metal article being manufactured is maintained in a bed of metal powder, with the surface of the article below the surface of the powder in the bed so that there is a layer of metal powder over the surface of the article. Metal powder in this layer is selectively fused such as by selective exposure to an energy source such as a laser or electron beam, according to data from a corresponding layer of a three-dimensional computer model of the article. After each layer is fused and solidified, the article is lowered in the bed or the level of the bed is raised so that a layer of metal powder covers the previously-formed layer of the article, and another layer of the powder is fused and solidified by selective exposure to the energy source based on data from another corresponding layer of the computer model. The resulting structure can be relatively complex, compared to structures obtainable by conventional metal fabrication techniques such as casting, forging, and mechanical deformation.

Attempts to fabricate metal articles using additive manufacturing techniques have faced various challenges. Many metal alloys used for casting have been proposed or tried for powder casting or additive manufacturing. However, many such alloys have limitations on strength or other physical properties that renders them unsuitable for many applications, including but not limited to aerospace and other applications requiring strength. In some cases, limitations on the powder bed processing can produce metal articles having a density less than 100%, resulting in different physical properties compared to metal casting which may produce metal articles at 100% density. In some cases, metal articles can exhibit physical properties such as strength and ductility that fall short of target values even if the additive manufacturing is conducted with materials and processing to produce metal at or close to 100% density.

### BRIEF DESCRIPTION

According to some embodiments of this disclosure, a method for making an article comprises inputting a digital model of an article into an additive manufacturing apparatus comprising an energy source. The additive manufacturing apparatus applies energy from the energy source to metal powder particles to fuse the metal powder particles and form fused metal at a first density in at least a portion of the article corresponding to the digital model. The fused metal is heated with application of an electric field and applying pressure to increase the density of the fused metal to a second density greater than the first density.

### BRIEF DESCRIPTION OF THE DRAWINGS

The subject matter which is regarded as the disclosure is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic depiction of an additive manufacturing apparatus for use according to the methods described herein;
FIG. 2 is a schematic depiction of an article having fused metal at different densities as described herein;
FIG. 3 is a schematic depiction of a field assisted sintering apparatus for use according to the methods described herein; and
FIG. 4 is a schematic depiction of a cross-section of an article being manufactured according to the methods described herein..

### DETAILED DESCRIPTION

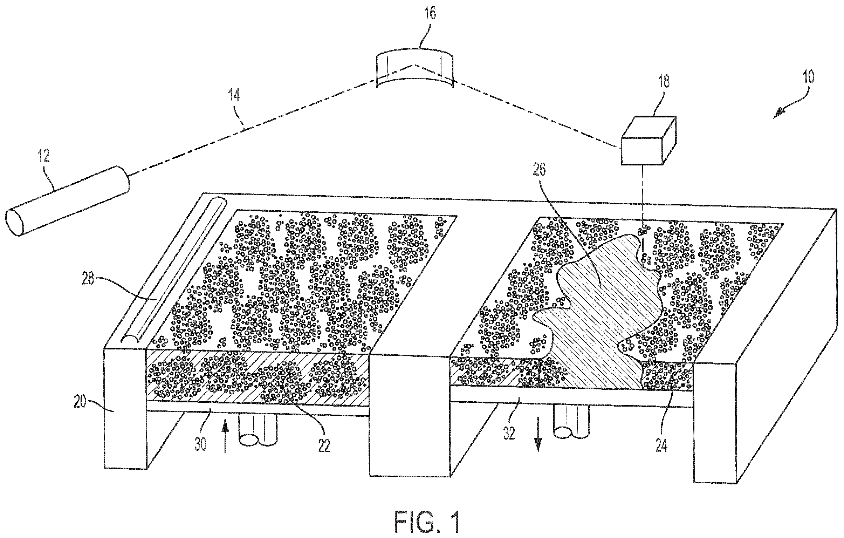

Referring now to FIG. 1, an example of an additive manufacturing system or apparatus 10 includes energy source 12 that generates an energy beam 14, a first mirror or other optical guide 16, a second mirror or optical guide 18, a frame 20, a powder supply 22, a powder processing bed 24, sintered powder material 26, a spreader 28, a powder supply support 30, and a stack support 32. Of course, the illustration in FIG. 1 is schematic in nature, and many alternative designs of additive manufacturing devices are possible. Various types of additive manufacturing materials, energy sources, and processes can be used to fabricate the air temperature sensor housing and the individual features thereof that are described herein. The type of additive manufacturing process used depends in part on the type of material out of which it is desired to manufacture the article. Metal powder additive manufacturing techniques can include selective laser sintering (SLS) or direct metal laser sintering (DMLS), in which a layer of metal or metal alloy powder is applied to the workpiece being fabricated and selectively sintered according to the digital model with heat energy from a directed laser beam. Another type of metal-forming process includes selective laser melting (SLM) or electron beam melting (EBM), in which heat energy provided by a directed laser or electron beam is used to selectively melt (instead of sinter) the metal powder so that it fuses as it cools and solidifies. FIG. 1 merely illustrates one potential additive manufacturing system for creating an additively manufactured article.

Metal powder particle sizes for powder fusion can range from 10 µm to 100 µm. In some aspects, the alloy elements can be combined together before forming a powder having a homogeneous composition. In some aspects, such as where particles will fully melt, one or more of the individual alloy elements can have its own powder particles that are mixed with particles of other elements in the alloy mixture, with formation of the actual alloy to occur during the fusion step of the additive manufacturing process. In some aspects, the powder is "neat", i.e., it includes only particles of the alloy or alloy elements. In other aspects, the powder can include other components such as polymer powder particles. In selective sintering, polymer particles can help to temporarily bind metal powder particles together during processing, to be later removed by pyrolysis caused by the energy source or post-fabrication thermal processing.

Referring again to FIG. 1, energy source 12 can be any source capable of creating focused energy. For example, energy source 12 can be a laser or an electron beam generator. Energy source 12 generates an energy beam 14, which is a beam of focused or focusable energy, such as a laser beam or an electron beam. Optical guide 16 such as a mirror is present in some embodiments to deflect radiation in a desired direction. A second optical guide 18, such as an optical head is present in some embodiments, and also directs energy in a desired direction. For example, optical guide 18 can include a mirror and be attached to an x-y positioning device. Frame 20 is used to contain powder material in powder supply 22 and in powder processing bed 24. Powder supply 22 and powder processing bed 24 include powder material, such as or powdered metals. Powder processing bed 24 further includes fused powder 26. Fused powder 26 is powder contained within powder processing bed 24 that has been at least partially sintered or melted. Spreader 28 is a spreading device such as an air knife using an inert gas instead of air, which can transfer powder material from powder supply 22 to powder processing bed 24. Powder supply support 30 and stack support 32 are used to raise and/or lower material thereon during additive manufacturing.

During operation, energy source 12 generates energy beam 14, which is directed by the optical guides 16 and 18 to the powder processing bed 24. The energy intensity and scanning rate and pattern of the energy beam 14 can be controlled to produce a desired result in the powder processing bed. In some aspects, the result can be partial melting of powder particles resulting in a fused structure after solidification such as a sintered powder metal structure having some degree of porosity derived from the gap spaces between fused powder particles. In some aspects, the result from exposure to the energy beam 14 can be complete localized melting and fluidization of the powder particles producing a metal article having a density approaching or equal to that of a cast metal article. In some aspects, the energy beam provides homogeneous melting such that an examination of the manufactured articles can detect no particle pattern from the original particles. After each layer of the additively manufactured article is completed, powder supply support 30 is moved to raise the height of powder material supply 22 with respect to frame. Similarly, stack support 32 is moved to lower the height of article with respect to frame 20. Spreader 28 transfers a layer of powder from powder supply 22 to powder processing bed 24. By repeating the process several times, an object may be constructed layer by layer. Components manufactured in this manner may be made as a single, solid component, and are generally stronger if they contain a smaller percentage of oxygen, hydrogen, or carbonaceous gases. Embodiments of the present invention reduce the quantity of impurities of, for example, oxygen, to less than 50 ppm, or even less than 20 ppm.

The digital models used in the practice of the disclosure are well-known in the art, and do not require further detailed description here. The digital model can be generated from various types of computer aided design (CAD) software, and various formats are known, including but not limited to SLT (standard tessellation language) files, AMF (additive manufacturing format) files, PLY files, wavefront (.obj) files, and others that can be open source or proprietary file formats.

As mentioned above, the additive manufacturing apparatus applies energy from the energy source to the metal powder to fuse the metal particles and form metal at a first density in at least a portion of the article corresponding to. The first density will be increased to a second higher density in subsequent processing, so the first density is a density that is less than 100% of a solid metal of maximum density. In some embodiments, the first density is in a range having a lower endpoint of 70% of maximum density, more specifically 75% of maximum density, even more specifically 80% of maximum density, and even more specifically 85% of maximum density, and an upper endpoint of 90% of maximum density, more specifically 85% of maximum density, more specifically 80% of maximum density, and even more specifically 75% of maximum density. The disclosure of the above-mentioned upper and lower range endpoints constitutes a disclosure of all possible combinations of range endpoints where the disclosed lower endpoint is less than the disclosed upper endpoint. Impossible combinations where the disclosed lower endpoint is greater than or equal to the disclosed upper endpoint are excluded. Density of the fused metal can be controlled by various techniques. For example, many powder bed additive manufacturing processes utilize a vector scanning pattern where regions of a layer of an article being fabricated are exposed to an energy beam that scans each region in a raster fashion. As the vector scanning beam, a melt zone (also known as a melt pool) is formed locally. The beam raster scanning lines are typically spaced so that a degree of overlap is provided between the melt zones of adjacent scanning lines, with closer spacing producing greater melting and flow which leads to higher density closer to the maximum density of solid metal, and farther apart spacing producing lower density. Fused metal density can also be controlled by other factors, such as energy beam intensity (with higher intensity levels over typical operating ranges tending to produce higher density and lower intensity levels producing lower density), energy beam vector scanning speed (with higher speeds over typical operating ranges tending to produce lover density and lower speeds producing higher density), or energy beam focus depth. Combinations of the above techniques (e.g., controlling both scanning line spacing and scanning speed) can be utilized as well.

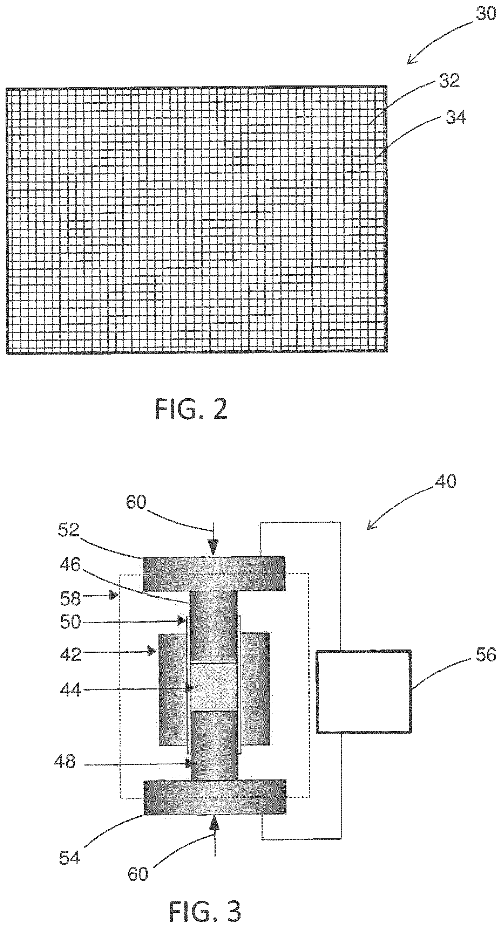

In some embodiments, the energy source can be applied to fuse metal powder particles to form fused metal at a third density greater than the first density in one or more regions or portions of the article different than the region(s) or portion(s) of fused metal at the first density. In some embodiments, the fused metal at the third higher density can be disposed in the article in a mesh configuration interposed with fused metal at the lower first density. An example embodiment of such a configuration is schematically depicted in FIG. 2 in which a cross-sectional view taken through a layer 30 of an article where fused metal at the higher third density 32 is disposed in a mesh configuration interposed with fused metal at the first density 34. Adjacent layers can maintain the same or alter the position or spacing of the mesh lines of higher third density fused metal 32. In some embodiments, integration of regions of higher density fused metal can provide a technical effect of promoting dimensional stability during subsequent processing to densify the fused metal at the lower first density. The third density level can be any density level higher than the first density level up to 100% of maximum density. Higher density levels can be less susceptible to deformation during subsequent densifying processing than lower density levels. In some embodiments, the third higher density level is at least 97% of maximum density. In some embodiments, the third higher density level is at least 98% of maximum density. In some embodiments, the third higher density level is at least 99% of maximum density. In some embodiments, the third higher density level is at least 99.9% of maximum density. In some embodiments, the third higher density level is 100% of maximum density.

As mentioned above, after formation of the article or portion thereof with the additive manufacturing apparatus of FIG. 1, the fused metal at the first density is heated with application of an electric field, and pressure is applied to increase the density of the fused metal to a second density. This can be accomplished utilizing an electric field assisted sintering technique (FAST) apparatus. An example embodiment of a FAST apparatus is schematically depicted in FIG. 3. As shown in FIG. 3, FAST apparatus 40 includes a graphite die 42 that holds an article 44 comprising fused metal at the first density that has been fabricated by an additive manufacturing apparatus such as shown in FIG. 1. Graphite punches 46, 48 are disposed in the die positioned against the article 44, with a graphite foil 50 disposed between the die 42 and the punches 46, 48 to facilitate movement of the punches in and out of the die cavity. Graphite electrodes 52, 54 are disposed in contact with the graphite punches 46, 48, and are electrically connected to a power source 56. The power source 56 can be a DC power source or an AC power source. An optional vacuum chamber 58 provides a reduced gas pressure during sintering. The graphite components depicted in FIG. 3 are electrically conductive, and undergo Joule heating which is transferred conductively to the article 44. Other materials can be used, but graphite is often used because of its heating capabilities and electrical conductive properties. Electrical energy passing through the conductive metal article also results in direct heating of the metal article.

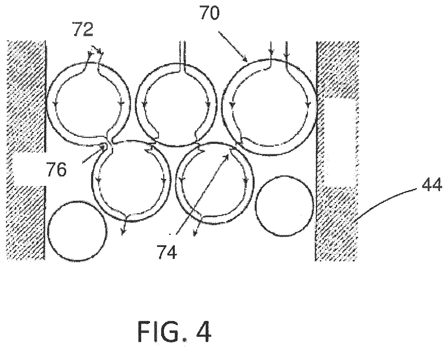

During operation of the FAST apparatus 40, an electric field is applied through the graphite electrodes 52, 54 and the other graphite components, resulting in heating of the article 44. The temperature to which the article 44 is subjected can be controlled by the intensity and duration of the electric field, and the specific temperature to which the article is subjected can vary depending on the material and target physical properties for the final densified material. For example, in some embodiments, some Ni-Cr-Mo-Nb superalloys such as Inconel 625 or Inconel 718 heat can be effectively sintered with FAST at temperatures greater than 900°C and less than 1200°C. In some embodiments, temperatures lower than 900°C can lead to incomplete sintering, and temperatures higher than 1200°C can lead to formation of carbides. Carbides such as Mo₂₃C₆ or Cr₂₃C₆, or Nb-rich carbides found in superalloys can be the result of thin oxide films formed on the powder particles, and are known in powder metallurgy field as "prior particle boundaries". Application of the electric field to the fused metal at the first density is schematically depicted in FIG. 4 where fused metal powder particles 70 are depicted disposed between the walls of the die 42. Electrical current 72 flows through the particles 70, discharging across gaps 74 between particles and providing joule heating at constrictions 76 where particles are joined.

As mentioned above, pressure, represented in FIG. 3 by arrows 60, is applied to the article 44 through the graphite punches 46, 48. Pressure can be applied at levels in a range having a lower end of 20 MPa, more specifically 25 MPa, and even more specifically 30 MPa, and an upper end of 150 MPa, more specifically 125 MPa, and even more specifically 100 MPa. The disclosure of the above-mentioned upper and lower range endpoints constitutes a disclosure of all possible combinations of range endpoints. Pressure can be applied simultaneous with or subsequent to application of the electric field. In some embodiments, pressure is applied during application of the electric field, but application of pressure is commenced after commencement of application of the electric field to allow the article 44 to come up to a sintering temperature before application of pressure. In some embodiments, application of pressure is continued after termination of the electric field to allow the article to cool below a specified temperature before termination of applied pressure.

## Claims

1. A method for making an article, comprising:
inputting a digital model of the article into an additive manufacturing apparatus or system comprising an energy source;
applying energy from the energy source to metal powder particles to fuse the metal powder particles and form fused metal at a first density in at least a portion of the article corresponding to the digital model; and
heating the fused metal with application of an electric field and applying pressure to increase the density of the fused metal to a second density greater than the first density.

2. The method of claim 1, comprising applying pressure to the fused metal simultaneously with application of the electric field.

3. The method of claims 1 or 2, comprising applying pressure to the fused metal after termination of the electric field.

4. The method of claims 1 or 3, comprising commencing application of pressure to the fused metal sequentially after commencement of application of the electric field and before termination of the electric field.

5. The method of any of claims 1-4, wherein applying energy from the energy source to the metal powder particles comprises applying a laser beam or an electron beam to the metal powder particles.

6. The method of any of claims 1-5, wherein applying energy from the energy source to the metal powder particles further comprises applying energy from the energy source to fuse the metal powder particles and form fused metal at a third density greater than the first density in at least a portion of the article different than the portion of fused metal at the first density.

7. The method of claim 6, wherein the energy source is applied to fuse metal at the third density in a mesh configuration interposed with fused metal at the first density.

8. The method of claims 6 or 7, wherein the energy source is applied as an energy beam scanned at a first spacing to fuse the metal powder particles at the first density, and scanned at a second spacing closer than the first spacing to fuse the metal powder particles at the third density,.

9. The method of any of claims 1-8, wherein the fused metal comprises prior particle boundaries after application of energy from the energy source or wherein the metal powder comprises constituents capable of forming prior particle boundaries in the fused metal.

10. The method of claim 9, wherein the prior particle boundaries comprise a metal carbide.

11. The method of any of claims 1-10, wherein the metal powder comprises an alloy comprising nickel and chromium.

12. The method of claim 11, wherein the alloy further comprises molybdenum.

13. The method of claim 12, wherein the alloy further comprises niobium or molybdenum or niobium.

14. The method of any of claims 1-13, wherein the fused metal is heated by application of the electric field to the fused metal.

15. The method of any of claims 1-14, wherein the fused metal is heated by application of the electric field to the fused metal, and by application of the electric field to heat an electrically conductive tool and conductive heat transfer from electrically conductive tool to the fused metal.
